# FASCICULE DE BREVET EUROPEEN

(11) **EP 3 388 347 B1**
(45) Date de publication et mention de la délivrance du brevet: **28.04.2021**
(21) Numéro de dépôt: 18163185.4
(22) Date de dépôt: 21.03.2018
(51) Int. Cl.: B64D 37/32

(54) **SYSTEME D'INERTAGE ET PROCEDE DE GENERATION D'UN GAZ D'INERTAGE DANS UN AERONEF, FONCTIONNANT SANS PRELEVEMENT D'AIR EXTERIEUR**
INERTISIERUNGSSYSTEM UND ERZEUGUNGSVERFAHREN VON INERTISIERUNGSGAS IN EINEM LUFTFAHRZEUG, DAS OHNE AUSSENLUFTENTNAHME FUNKTIONIERT
INERTING SYSTEM AND METHOD FOR GENERATING AN INERTING GAS IN AN AIRCRAFT, OPERATING WITHOUT EXTERNAL AIR COLLECTION

(30) Priorité: 05.04.2017 FR 1752936
(43) Date de publication de la demande: 17.10.2018
(73) Titulaire: SAFRAN AEROTECHNICS, 78370 Plaisir (FR)
(72) Inventeur: MAILHET, Pierrick, 42290 SORBIERS (FR); TONG-YETTE, Frédéric, 42100 SAINT-ETIENNE (FR)
(74) Mandataire: Delprat, Olivier

(56) Documents cités:
- US-A1- 2007 023 577
- US-A1- 2013 312 744
- US-A1- 2016 228 807

## Description

### DOMAINE TECHNIQUE

La présente invention se rapporte au domaine technique des systèmes d'inertage mis en œuvre dans un aéronef, tel qu'un avion, un hélicoptère ou analogue.

L'invention trouve une application avantageuse pour rendre inerte des réservoirs de carburant, des compartiments cargo, des baies avioniques, des lieux de stockage de batteries, ou tout autre volume d'un aéronef.

### ART ANTERIEUR

Dans le domaine de l'aéronautique, il est bien connu d'utiliser des systèmes d'inertage pour générer un gaz d'inertage, tel que de l'azote, ou tout autre gaz neutre tel que du dioxyde de carbone par exemple, et pour introduire ce gaz d'inertage dans un volume à rendre inerte, notamment pour des raisons de sécurité afin de réduire le risque d'explosion dudit volume.

Un système d'inertage connu de l'art antérieur comporte, d'une manière générale, un système de préparation d'air permettant de refroidir et de réguler en température un flux d'air, par exemple de l'air à haute température détourné d'au moins un moteur de l'aéronef. À cet effet, le système de préparation d'air nécessite le prélèvement d'air extérieur à l'aéronef afin de refroidir le flux d'air au niveau d'un échangeur de chaleur.

Le système d'inertage comprend également au moins un module de séparation d'air, comprenant des membranes de perméation gazeuse, telles que des membranes en polymère, au travers desquelles le flux d'air est pressé pour appauvrir cet air en oxygène, et générer du gaz d'inertage, enrichi en azote.

Enfin, le système d'inertage comprend des moyens de distribution du gaz d'inertage jusqu'au volume à rendre inerte.

Cependant, ce type de système d'inertage selon l'art antérieur comprend quelques inconvénients inhérents à sa structure. En effet, le fait que le système d'inertage comprend un système de préparation d'air entraîne indéniablement une masse supplémentaire embarquée, soumet le système à une certaine fiabilité, entraîne une perte de charge et une intégration aéronef non négligeable, mais surtout nécessite la création d'une conduite de prélèvement d'air extérieur au niveau de la carlingue de l'aéronef pour le refroidissement du flux d'air à rendre inerte. Ainsi, d'une manière désavantageuse, le prélèvement d'air extérieur à l'aéronef engendre une traînée supplémentaire qui augmente la consommation de carburant et les émissions de CO2 de l'aéronef.

De plus, un ventilateur est généralement mis en route pour générer un débit d'air de refroidissement lorsque l'avion est stationné au sol, et arrêté en dehors de cette phase. Ce ventilateur consiste en un composant embarqué qui, pour la plupart du temps, n'est pas utilisé. Enfin, le système de préparation d'air, de par son inertie thermique, augmente le temps de chauffe global du système d'inertage

Le document DI US 2007/023577 décrit un système d'inertage selon le préambule de la revendication 1.

### EXPOSE DE L'INVENTION

L'un des buts de l'invention est donc de remédier aux inconvénients de l'art antérieur en proposant un système d'inertage pour aéronef, qui ne nécessite pas de prélèvement d'air extérieur, tout en permettant de générer un gaz d'inertage à basse température, c'est-à-dire à une température inférieure à la température de certification des matériaux constituant l'aéronef, par exemple inférieure à 80°C pour les aéronefs de l'état de la technique disponibles à la date de dépôt de la présente demande de brevet.

Un autre objectif de l'invention est de fournir un tel système d'inertage qui permet, par rapport au système de l'art antérieur, de gagner en fiabilité, de réaliser des économies de carburant, et d'être plus respectueux de l'environnement.

À cet effet, il a été mis au point un système d'inertage pour aéronef selon la revendication 1.

De cette manière, le système d'inertage selon l'invention ne nécessite aucun prélèvement d'air extérieur à l'aéronef, l'air comprimé est admis directement à haute température dans le module de séparation d'air, et est ensuite refroidi automatiquement par la turbine qui se trouve disposée à la sortie dudit module de séparation d'air.

De ce qui précède, le système selon l'invention permet de gagner en fiabilité car il permet de s'affranchir du système de préparation d'air mis en œuvre dans l'art antérieur, et de s'affranchir notamment de l'échangeur thermique relié à une conduite de prélèvement d'air extérieur. De cette manière, le système d'inertage selon invention ne crée pas de traînée supplémentaire pour l'aéronef, ce qui lui permet d'économiser du carburant et de réduire ses émissions de CO2. De plus, la suppression du système de préparation d'air permet, en pratique, de réduire au minimum la distance entre le compresseur et le module de séparation d'air, de sorte que ce dernier est plus rapidement conditionné en température et est, par conséquent, opérationnel plus rapidement.

De ce qui précède, le système selon l'invention permet de générer un gaz d'inertage à basse température, sans prélèvement d'air extérieur.

Par « résistantes », on entend que les membranes ont une durée de vie supérieure à 15000 heures.

La turbine est mécaniquement couplée à un moteur électrique disposé pour entraîner le compresseur en rotation. De cette manière, cela permet de réaliser un turbocompresseur, et d'utiliser l'énergie générée par la rotation de la turbine pour faire tourner le moteur électrique afin de pouvoir réduire sa taille, sa masse, et sa consommation électrique. L'invention permet alors de valoriser l'énergie pneumatique contenue dans le gaz d'inertage en sortie du module de séparation d'air, tout en abaissant sa température avant injection dans un réservoir, par exemple.

Le système d'inertage selon l'invention comprend des moyens de refroidissement du moteur électrique. De cette manière, le système est fiable et sa durée de vie est optimale.

Pour refroidir le moteur électrique, le circuit d'air du système d'inertage comprend, en sortie du compresseur, une conduite de déviation d'air comprimé, dans laquelle le moteur électrique est disposé, la conduite comprend une portion de section calibrée pour détendre et refroidir l'air comprimé en aval du moteur électrique pour refroidir le moteur électrique.

Selon un exemple ne faisant pas partie de l'invention, et dans le cas où le système d'inertage est alimenté avec de l'air provenant d'une cabine de l'aéronef, le circuit d'air comprend, en amont du compresseur, une conduite de déviation dans laquelle sont disposés le moteur électrique et un ventilateur pour aspirer de l'air en aval du moteur électrique et le diriger vers le moteur pour le refroidir.

Dans cet exemple, le ventilateur est destiné à être mis en route lorsque l'aéronef se trouve au sol, puis arrêté en phase de vol. La différence de pression entre l'extérieur et la cabine de l'aéronef, dans laquelle de l'air est par exemple prélevé, est ensuite suffisante pour pouvoir générer un débit d'air, sans avoir besoin de mettre en route le ventilateur.

Selon un autre exemple ne faisant pas partie de l'invention, le circuit d'air comprend, en amont du compresseur, une conduite de déviation d'air dans laquelle sont disposés un ventilateur centrifuge à faible taux de compression et mécaniquement lié au premier compresseur et le moteur électrique, le ventilateur centrifuge étant apte à diriger de l'air vers le moteur pour le refroidir.

De préférence, la conduite de déviation débouche au niveau de la sortie de gaz enrichi en oxygène du module de séparation d'air pour être mélangé à celui-ci. Une vanne de régulation de débit peut notamment être disposée sur la conduite de déviation, en amont de la sortie du gaz enrichi en oxygène, pour réguler le débit d'air nécessaire au refroidissement du moteur électrique.

L'invention vise également à fournir un procédé de génération d'un gaz d'inertage dans un aéronef, mettant en œuvre le système d'inertage ci-avant décrit.

Selon l'invention, le procédé comprend des étapes consistant à :
- alimenter le circuit de gaz du système d'inertage avec de l'air, par exemple prélevé dans une cabine passagers de l'aéronef ;
- comprimer l'air par l'intermédiaire d'un compresseur ;
- faire circuler l'air comprimé à haute température au travers des membranes de perméation gazeuse résistantes à une température supérieure ou égale à 100°C, pour appauvrir l'air en oxygène et générer du gaz d'inertage ;
- détendre le gaz d'inertage par l'intermédiaire d'une turbine pour générer un gaz d'inertage à basse température.

De ce qui précède, le procédé de génération d'un gaz d'inertage selon l'invention comprend les mêmes avantages que le système d'inertage ci-avant décrit, et notamment l'avantage principal de ne pas nécessiter de prélèvement d'air extérieur pour son fonctionnement.

D'une manière avantageuse, le procédé comprend une étape consistant à récupérer l'énergie de la turbine pour entraîner en rotation le compresseur. De cette manière, l'énergie pneumatique contenue dans le gaz d'inertage est valorisée, tout en permettant d'abaisser sa température.

### DESCRIPTION SOMMAIRE DES FIGURES

D'autres avantages et caractéristiques ressortiront mieux de la description qui va suivre, donnée à titre d'exemple non limitatif, du système d'inertage et du procédé de génération d'un gaz d'inertage selon l'invention, à partir des dessins annexés dans lesquels :
- la figure 1 est une représentation schématique du système d'inertage selon l'invention, et selon une forme de réalisation des moyens de refroidissement du moteur électrique du turbocompresseur selon l'invention ;
- la figure 2 est une représentation schématique similaire à celle de la figure 1, illustrant un exemple de réalisation alternative ne faisant pas partie de l'invention des moyens de refroidissement ;
- la figure 3 est une représentation schématique similaire à celle de la figure 1, et illustrant un autre exemple de réalisation alternative ne faisant pas partie de l'invention des moyens de refroidissement.

### DESCRIPTION DETAILLEE DE L'INVENTION

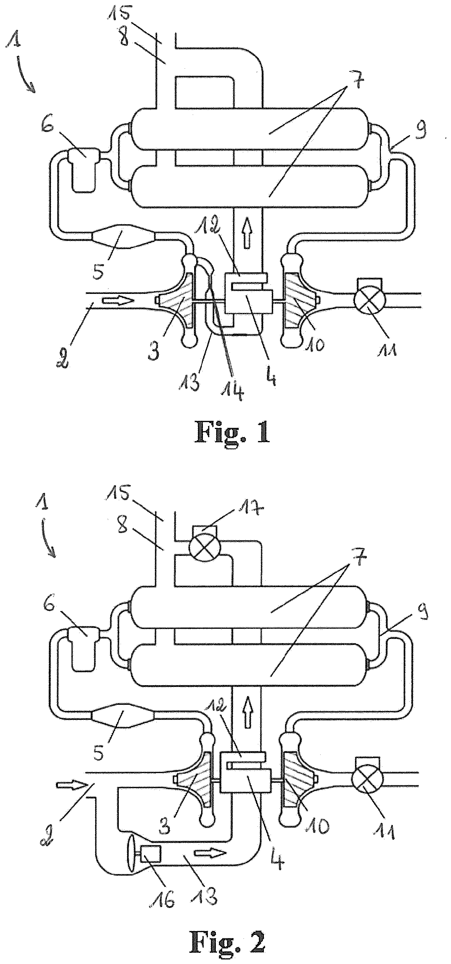

En référence à la figure 1, l'invention concerne un système d'inertage (1) pour aéronef, permettant de rendre inerte un volume tel qu'un réservoir de carburant, un compartiment cargo, un lieu de stockage de batteries, ou tout autre volume.

Le système d'inertage (1) comprend un circuit de gaz comportant une entrée (2) destinée à être alimentée en air, par exemple avec de l'air provenant d'une cabine passagers de l'aéronef. Le circuit d'air comprend ensuite un compresseur (3), entraîné en rotation par un moteur électrique (4), pour comprimer l'air.

En sortie du compresseur (3), l'air comprimé passe au travers d'un convertisseur d'ozone (5), et d'un filtre à particules (6) avant de pénétrer dans au moins un module de séparation d'air (7). Le système d'inertage (1) décrit comprend deux modules de séparation d'air (7). Chaque module de séparation d'air (7) comprend intérieurement des membranes de perméation gazeuse, par exemple des membranes en polymère, résistantes à des hautes températures, notamment supérieures à 100°C, et de préférence supérieures à 140°C. Le nombre de modules de séparation d'air (7) est fonction des performances souhaitées du système d'inertage (1). Le taux de compression du compresseur (3) est limité afin de ne pas dépasser la température maximale admissible par les membranes. Par exemple, pour une température limite de 130°C de l'air à l'entrée du module de séparation d'air (7), le taux de compression du compresseur (3) est limité à environ 2,5 si l'on prend en compte un rendement polytropique du compresseur (3) de 80%.

L'air comprimé est pressé au travers des membranes de perméation gazeuse pour générer, d'une part, un gaz enrichi en oxygène s'échappant par l'intermédiaire d'une sortie (8) et, d'autre part, un gaz appauvri en oxygène constituant le gaz d'inertage, s'échappant par une sortie (9). La sortie (9) de gaz d'inertage est reliée à une turbine (10) utilisée pour détendre et refroidir le gaz d'inertage.

La turbine (10) est mécaniquement accouplée au moteur électrique (4) du compresseur (3) de sorte à former un ensemble (3-4-10) de turbocompresseur électrique. Ainsi, la présence de la turbine (10) permet de valoriser l'énergie pneumatique contenue dans le gaz d'inertage, pour faire tourner le compresseur (3), tout en abaissant la température du gaz d'inertage avant son injection dans le volume à rendre inerte. En pratique, il a été constaté que la turbine (10) permet de récupérer environ 20 % de l'énergie pneumatique du gaz d'inertage.

Une vanne de régulation de débit (11) est disposée sur le circuit d'air, en aval de la turbine (10), pour réguler le débit de gaz d'inertage qui est ensuite dirigé vers un système de distribution non représenté.

Pour améliorer la fiabilité du système et sa durée de vie, des composants nécessitent d'être refroidis, et en particulier le moteur électrique (4), une unité électronique de commande (12) dudit moteur (4), et tout autre composant du moteur électrique (4) tel que par exemple des roulements à billes ou paliers à air non représentés.

À cet effet, le système comprend des moyens de refroidissement, pouvant être réalisés de plusieurs manières.

Un mode de réalisation est illustré à la figure 1, dans lequel une partie de l'air comprimé issu du compresseur (3) est prélevée par l'intermédiaire d'une conduite de déviation (13) comprenant une portion de section (14) calibrée pour détendre l'air, et dans laquelle le moteur électrique (4) est disposé de sorte à pouvoir être refroidi par le flux d'air détendu. En effet, la détente de l'air est suffisante pour faire chuter sa température et ainsi refroidir les différents éléments constitutifs du moteur électrique (4). La conduite de déviation (13) débouche ensuite au niveau de la sortie (8) de gaz enrichi en oxygène pour être mélangé à celui-ci, notamment grâce à un mélangeur (15). Le mélange ainsi créé est acheminé à l'extérieur de l'avion grâce à une canalisation.

Selon un exemple , illustré à la figure 2, ne faisant pas partie de l'invention mais représentant des éléments qui sont utiles à la compréhension de l'invention, le refroidissement du moteur électrique (4) est réalisé par l'intermédiaire d'une conduite de déviation (13) disposée en amont du compresseur (3), et dans laquelle est disposé un ventilateur (16) pour aspirer de l'air et le diriger vers le moteur (4) également disposé dans la conduite de déviation (13) pour le refroidir. Le ventilateur (16) permet de générer un débit de gaz suffisant pour refroidir le moteur électrique (4). Dans le cas où le système d'inertage (1) est alimenté avec de l'air provenant d'une cabine de l'aéronef, le ventilateur (16) est utilisé et mis en route lorsque l'aéronef se trouve au sol, puis arrêté en phase de vol. La différence de pression entre l'extérieur de l'aéronef et la cabine passagers à partir de laquelle l'air est par exemple prélevé, est suffisante pour pouvoir générer un débit d'air pour refroidir le moteur électrique (4). L'air circule au travers du ventilateur (16) non alimenté, et son débit est avantageusement régulé par l'intermédiaire d'une vanne de régulation de débit (17) positionnée sur la conduite de déviation (13), en amont de la sortie (8) de gaz enrichi en oxygène. De la même manière que précédemment, la conduite de déviation (13) débouche au niveau de la sortie (8) de gaz enrichi en oxygène pour être mélangé avec celui-ci.

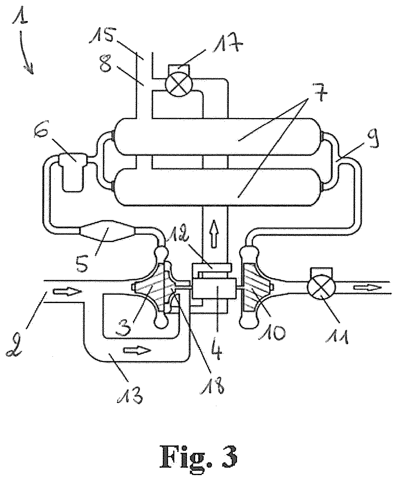

Un exemple ultérieur des moyens de refroidissement, ne faisant pas partie de l'invention mais représentant des éléments qui sont utiles à la compréhension de l'invention, est illustré à la figure 3. Dans cet exemple, le circuit d'air du système d'inertage (1) comprend, en amont du compresseur (3), une conduite de déviation (13) d'air destiné à alimenter un ventilateur centrifuge (18). Le ventilateur centrifuge (18) est lié mécaniquement au premier compresseur (3) et possède un plus faible taux de compression, par exemple 1.2, pour générer un débit d'air de refroidissement suffisant pour refroidir le moteur électrique (4) également disposé dans la conduite de déviation (13). De la même manière, la conduite de déviation (13) débouche ensuite au niveau de la sortie (8) de gaz enrichi en oxygène.

De ce qui précède, l'invention permet de fournir un système d'inertage (1) comprenant un circuit d'air, par exemple alimenté avec de l'air prélevé dans une cabine passagers de l'aéronef. Le système d'inertage (1) permet de comprimer l'air par l'intermédiaire du compresseur (3), et de faire circuler l'air comprimé, directement à haute température, au travers des membranes de perméation gazeuse résistantes à cette haute température, pour appauvrir l'air en oxygène et générer le gaz d'inertage. Contrairement à l'état de la technique, ce système d'inertage (1) ne nécessite aucun prélèvement d'air extérieur pour refroidir l'air en amont des membranes, et en sortie desdites membranes le gaz d'inertage est détendu par l'intermédiaire d'une turbine (10) pour générer un gaz d'inertage à basse température.

De ce qui précède, l'invention permet de s'affranchir du système de préparation d'air et notamment du prélèvement d'air extérieur. Le système est donc peu encombrant, fiable, ne crée pas de traînée supplémentaire et donc ne grève pas la consommation de carburant de l'aéronef, ni ses émissions de CO2.

## Revendications

1. Système d'inertage (1) pour aéronef, ledit système comprenant un circuit de gaz comportant successivement, au moins une entrée (2) d'air, un compresseur (3), et un module de séparation d'air (7), le module de séparation d'air (7) comprenant une sortie (8) de gaz enrichi en oxygène, et une sortie (9) de gaz d'inertage, la sortie (9) de gaz d'inertage est reliée à une turbine (10) pour détendre et refroidir le gaz d'inertage mécaniquement couplée à un moteur électrique (4) entrainant en rotation le compresseur (3), formant ainsi un turbocompresseur (3-4-10) ***caractérisé* en ce que** le module de séparation d'air (7) comprend des membranes de perméation gazeuse résistantes à une température supérieure ou égale à 100°C, ***et en ce que*** le circuit d'air comprend, en sortie du compresseur (3), une conduite de déviation (13) d'air comprimé dans laquelle le moteur électrique (4) est disposé, la conduite de déviation (13) comprend une portion de section (14) calibrée pour détendre et refroidir l'air comprimé en amont du moteur électrique (4) pour refroidir le moteur électrique (4).

2. Système selon la revendication 1, ***caractérisé* en ce que** les membranes de perméation gazeuse sont résistantes à une température supérieure ou égale à 140°C.

3. Système selon la revendication 1, ***caractérisé* en ce que** la conduite de déviation (13) débouche au niveau de la sortie (8) de gaz enrichi en oxygène pour être mélangé à celui-ci.

4. Système selon la revendication 3, ***caractérisé* en ce qu'**une vanne de régulation de débit (17) est disposée sur la conduite de déviation (13), en amont de la sortie (8) de gaz enrichi en oxygène.

5. Procédé de génération d'un gaz d'inertage dans un aéronef, mettant en œuvre le système d'inertage (1) selon la revendication 1, ***caractérisé* en ce qu'**il comprend des étapes consistant à :
- alimenter le circuit de gaz du système d'inertage (1) avec de l'air ;
- comprimer l'air par l'intermédiaire d'un compresseur (3) ;
- faire circuler l'air comprimé à haute température au travers des membranes de perméation gazeuse résistantes à une température supérieure ou égale à 100°C, pour appauvrir l'air en oxygène et générer du gaz d'inertage ;
- détendre le gaz d'inertage par l'intermédiaire d'une turbine (10) pour générer un gaz d'inertage à basse température.

6. Procédé selon la revendication 5, ***caractérisé* en ce qu'**il consiste à récupérer l'énergie de la turbine (10) pour entrainer en rotation le compresseur (3).

## Patentansprüche

1. Inertisierungssystem (1) für ein Luftfahrzeug, wobei das System einen Gaskreislauf umfasst, der nacheinander mindestens einen Lufteingang (2), einen Verdichter (3) und ein Luftabscheidemodul (7) beinhaltet, wobei das Luftabscheidemodul (7) einen Ausgang (8) für mit Sauerstoff angereichertes Gas, und einen Ausgang (9) für Inertisierungsgas umfasst, wobei der Ausgang (9) für Inertisierungsgas an eine Turbine (10) zum Entspannen und Kühlen des Inertisierungsgases angeschlossen ist, die mechanisch mit einem Elektromotor (4) gekoppelt ist, der den Verdichter (3) in Drehung antreibt, wodurch ein Turboverdichter (3-4-10) gebildet wird, **dadurch gekennzeichnet, dass** das Luftabscheidemodul (7) Gasdurchlassmembrane umfasst, die einer Temperatur gleich 100 °C oder mehr standhalten, und dadurch, dass der Luftkreislauf am Ausgang des Verdichters (3) eine Druckluftumlenkleitung (13) umfasst, in der der Elektromotor (4) angeordnet ist, wobei die Umlenkleitung (13) einen kalibrierten Querschnittsabschnitt (14) zum Entspannen und Kühlen der Druckluft stromaufwärts des Elektromotors (4) zum Kühlen des Elektromotors (4) umfasst.

2. System nach Anspruch 1, **dadurch gekennzeichnet, dass** die Gasdurchlassmembrane einer Temperatur gleich 140 °C oder mehr standhalten.

3. System nach Anspruch 1, **dadurch gekennzeichnet, dass** die Umlenkleitung (13) in den Bereich des Ausgangs (8) für mit Sauerstoff angereichertes Gas mündet, um mit diesem vermischt zu werden.

4. System nach Anspruch 3, **dadurch gekennzeichnet, dass** ein Durchsatzregelventil (17) in der Umlenkleitung (13) stromaufwärts des Ausgangs (8) für mit Sauerstoff angereichertes Gas angeordnet ist.

5. Verfahren zum Erzeugen eines Inertisierungsgases in einem Luftfahrzeug, welches das Inertisierungssystem (1) nach Anspruch 1 anwendet, **dadurch gekennzeichnet, dass** es die folgenden Schritte umfasst:
- Versorgen des Gaskreislaufs des Inertisierungssystems (1) mit Luft;
- Verdichten der Luft anhand eines Verdichters (3);
- Zirkulieren lassen der Druckluft bei hoher Temperatur durch Gasdurchlassmembrane hindurch, die einer Temperatur gleich 100 °C oder mehr standhalten, um die Luft an Sauerstoff zu verarmen und Inertisierungsgas zu erzeugen;
- Entspannen des Inertisierungsgases anhand einer Turbine (10) zum Erzeugen eines Inertisierungsgases bei niedriger Temperatur.

6. Verfahren nach Anspruch 5, **dadurch gekennzeichnet, dass** es darin besteht, die Energie der Turbine (10) zurückzugewinnen, um den Verdichter (3) in Drehung anzutreiben.

## Claims

1. Inerting system (1) for an aircraft, said system comprising a gas circuit having successively at least an air inlet (2), a compressor (3) and an air separation module (7), the air separation module (7) comprising an outlet (8) for oxygen-enriched gas and an outlet (9) for inerting gas, the inerting gas outlet (9) being connected to a turbine (10) for expanding and cooling the inerting gas, mechanically coupled to an electric motor (4) rotating the compressor (3), thus forming a turbocharger (3-4-10), **characterised in that** the air separation module (7) comprises gas permeation membranes resistant to a temperature greater than or equal to 100° C., and **in that** the air circuit comprises, at the outlet of the compressor (3), a compressed air bypass conduit (13) in which the electric motor (4) is disposed, the bypass conduit (13) comprising a portion of section (14) sized for expanding and cooling the compressed air upstream of the electric motor (4) in order to cool the electric motor (4).

2. System according to claim 1, **characterised in that** the gas permeation membranes are resistant to a temperature greater than or equal to 140°C.

3. System according to claim 1, **characterised in that** the bypass conduit (13) opens out at the oxygen-enriched gas outlet (8) in order to be mixed therewith.

4. System according to claim 3, **characterised in that** a flow control valve (17) is disposed on the bypass conduit (13) upstream of the oxygen-enriched gas outlet (8).

5. Method for generating an inerting gas in an aircraft implementing the inerting system (1) according to claim 1, **characterised in that** it comprises steps consisting of:
- feeding the gas circuit of the inerting system (1) with air;
- compressing the air by means of a compressor (3);
- circulating the compressed air at a high temperature through gas permeation membranes resistant to a temperature greater than or equal to 100°C, in order to deplete the air of oxygen and generate inerting gas;
- expanding the inerting gas by means of a turbine (10) to generate a low-temperature inerting gas.

6. Method according to claim 5, **characterised in that** it consists of recovering the energy from the turbine (10) in order to rotate the compressor (3).
